# EUROPÄISCHE PATENTSCHRIFT

(11) **EP 3 283 666 B1**
(45) Veröffentlichungstag und Bekanntmachung des Hinweises auf die Patenterteilung: **30.10.2019**
(21) Anmeldenummer: 16714390.8
(22) Anmeldetag: 01.04.2016
(51) Int. Cl.: C23C 22/34, C09D 5/00, C09D 5/08, C09D 5/12, C09D 139/06, C11D 11/00, C23C 22/78, C23F 11/173

(54) **POLYMERHALTIGE VORSPÜLE VOR EINER KONVERSIONSBEHANDLUNG**
POLYMER-CONTAINING PRE-RINSE PRIOR TO A CONVERSION TREATMENT
PRÉRINÇAGE CONTENANT DU POLYMÈRE AVANT UN TRAITEMENT DE CONVERSION

(30) Priorität: 15.04.2015 DE 102015206812
(43) Veröffentlichungstag der Anmeldung: 21.02.2018
(73) Patentinhaber: Henkel AG & Co. KGaA, 40589 Düsseldorf (DE)
(72) Erfinder: CORNEN, Sophie, 40597 Düsseldorf (DE); WAPNER, Kristof, 40589 Düsseldorf (DE); POSNER, Ralf, 41540 Dormangen (DE); HENZE, Natascha, 51375 Leverkusen (DE); LILL, Kirsten Agnes, 50823 Köln (DE); MAAS, Michiel Gerard, 51379 Leverkusen (DE)
(86) Internationale Anmeldenummer: PCT/EP2016/057220
(87) Internationale Veröffentlichungsnummer: WO 2016/165958

(56) Entgegenhaltungen:
- EP-A2- 2 253 741
- WO-A1-2014/151617
- US-A1- 2007 017 602
- US-A1- 2010 222 248
- US-A1- 2012 282 404
- US-A1- 2013 273 274

## Beschreibung

Die vorliegende Erfindung betrifft ein mehrstufiges Verfahren zur korrosionsschützenden Vorbehandlung von aus metallischen Werkstoffen gefertigten Bauteilen, bei dem auf eine nasschemische Behandlung mit einer wässrigen Zusammensetzung (A) enthaltend ein gelöstes und/oder dispergiertes Polymer P, das mit Heterozyklen enthaltend zumindest ein quartären Stickstoff-Heteroatom substituiert ist, eine Konversionsbehandlung auf Basis wasserlöslicher Verbindungen der Elemente Zr, Ti und/oder Si folgt, bevor ggf. weitere vor Korrosion schützende Beschichtungen aufgebracht werden.

Die Konversionsbehandlung metallischer Oberflächen zur Bereitstellung eines vor Korrosion schützenden Überzuges auf Basis wässriger Zusammensetzungen enthaltend wasserlösliche Verbindungen der Elemente Zr, Ti und/oder Si ist ein in der Patentliteratur extensiv beschriebenes technisches Gebiet. Zur Verbesserung der Eigenschaftsprofils derartiger Konversionsbehandlungen hinsichtlich Korrosionsschutz und Vermittlung einer hinreichenden Lackhaftung sind vielfältige Varianten einer solchen Metallvorbehandlung bekannt, die entweder auf die Zusammensetzung der die Konversion bewirkenden Agentien abzielen oder auf im unmittelbaren Kontext der Konversionsbehandlung weitere nasschemische Behandlungsschritte zurückgreifen.

Die EP 1 455 002 A1 beschreibt beispielsweise, dass es für Konversionsbehandlung mittels zuvor beschriebener Zusammensetzungen, die zusätzlich Fluorid-Ionen als komplexierendes und die Metalloberflächen beizendes Agens enthalten, vorteilhaft ist, wenn zur Reduzierung des Fluorid-Anteils in der Konversionsschicht der eigentlichen nasschemischen Behandlung eine wässrige Spüle enthaltend basisch reagierende Verbindungen unmittelbar nachfolgt oder ein Trocknungsschritt nachgelagert ist. Alternativ dient der Reduzierung des Fluorid-Gehaltes in der Konversionsschicht der Zusatz bestimmter Kationen ausgewählt aus Calcium, Magnesium, Zink, Kupfer oder aus Silizium enthaltenden Verbindungen zur die Konversion der Oberfläche herbeiführenden Zusammensetzung.

Bezüglich weiterer Anpassungen des Verfahrensablaufs bei der Verwendung von Fluorid-Ionen und wasserlösliche Verbindungen der Elemente Zr und/oder Ti enthaltenden Agentien zur Konversionsbehandlung lehrt die WO 2011012443 A1 eine nachgelagerte wässrige Spüle enthaltend organische Verbindungen, die aromatische Heterozyklen mit zumindest einem Stickstoff-Heteroatom aufweisen.

Ebenso offenbart die DE 100 05 113 A1 ein Verfahren bei dem der Konversionsbehandlung einer Metalloberfläche eine nachgelagerte nasschemische Behandlung mit einer wässrigen Zusammensetzung enthaltend Homo- und/oder Copolymere von Vinylpyrrolidon folgt, wobei vorzugsweise Copolymere von Vinylpyrrolidon mit zusätzlichen Caprolactam-Gruppen eingesetzt werden. In einem weiteren Aspekt dieser Offenlegungsschrift wird auch die Applikation derartiger Homo- oder Copolymere auf der blanken Metalloberfläche für eine nachfolgende Lackierung dargelegt.

Eine verwandte Lehre offenbart auch die DE 103 58 309 A1, wenn dort die Verwendung von Phenol-Aldehyd-Harzen enthaltend neben der phenolischen Komponente eine aromatische Hydroxycarbonsäure und Imidazol anstelle der zuvor genannten Homo- und Copolymere zur korrosionsschützenden Behandlung von blanken oder mit einer Konversionsschicht versehenen Metalloberflächen vorgeschlagen wird.

Die US 2007/017602 A1, US 2010/222248 A1 und EP 2 253 741 A2 offenbaren jeweils ein mehrstufiges Behandlungsverfahren von metallischen Oberflächen, bei dem die Metalloberflächen mit einer wässrigen Zusammensetzung enthaltend ein organisches Polymer, das mit Heterozyklen, welche zumindest mit einem quartären Stickstoff-Heteroatom substituiert sind, behandelt werden, gefolgt von einer Konversionsbehandlung mit einer sauren, wässrigen Zusammensetzung enthaltend eine Titan- oder eine Zirkonium-Verbindung.

Gegenüber diesem Stand der Technik bestand die Aufgabe, die korrosionsschützende Eigenschaften von Konversionsschichten auf verschiedenen Metallsubstraten erhältlich durch Vorbehandeln mit Zusammensetzungen wasserlöslicher Verbindungen der Elemente Zr, Ti und/oder Si weiter zu vereinheitlichen und insbesondere auf den Stahloberflächen zu verbessern. Hierbei sollen insbesondere die durchschnittlichen Unterwanderungswerte in der korrosiven Delamination nach Lackschichtaufbau verbessert werden oder zumindest hinsichtlich ihrer Varianz stabilisiert werden, das heißt, verfahrenstechnisch zuverlässig erzielt werden können. Hinsichtlich der Anwendung auf verschiedenen Metallsubstraten ist insbesondere eine optimale Korrosionsschutzwirkung von solchen Verbundkonstruktionen mittels einer entsprechenden nasschemischen Vorbehandlung erwünscht, die neben Oberflächen der Werkstoffe Zink, Eisen, Stahl und/oder verzinkter Stahl auch Oberflächen des Werkstoffes Aluminium aufweisen.

Diese Aufgabe wird gelöst durch ein mehrstufiges Verfahren gemäß Anspruch 1.

In dem Verfahren zur korrosionsschützenden Vorbehandlung von zumindest teilweise aus metallischen Werkstoffen gefertigten Bauteilen wird zunächst
i) zumindest ein Teil der Oberflächen des Bauteils, die von den metallischen Werkstoffen gebildet werden, mit einer wässrigen Zusammensetzung (A) enthaltend ein gelöstes und/oder dispergiertes organisches Polymer P, das zu einem Gewichtsanteil von zumindest 40% bezogen auf den Gesamtanteil des Polymers P aus solchen Repetiereinheiten R_{N} aufgebaut ist, die als Substituenten einen Heterozyklus mit zumindest einem quartären Stickstoff-Heteroatom aufweisen, behandelt
   und anschließend wird
ii) zumindest derselbe Teil der Oberflächen des Bauteils, die von den metallischen Werkstoffen gebildet werden, mit oder ohne dazwischenliegendem Spül- und/oder Trocknungsschritt mit einer sauren wässrigen Zusammensetzung (B) enthaltend ein oder mehrere wasserlösliche Verbindungen der Elemente Zr, Ti und/oder Si in Kontakt gebracht.

Die gemäß vorliegender Erfindung behandelten Bauteile können alle beliebig geformten und ausgestalteten räumlichen Gebilde sein, die einem Fabrikationsprozess entstammen, insbesondere auch Halbzeuge wie Bänder, Bleche, Stangen, Rohre, etc. und Verbundkonstruktionen zusammengefügt aus vorgenannten Halbzeugen.

Erfindungsgemäß wird im ersten Schritt i) des erfindungsgemäßen Verfahrens eine Behandlung mit der wässrigen Zusammensetzung (A) enthaltend das Polymer P durchgeführt. Diese Behandlung bewirkt eine derartige Konditionierung der Oberflächen des Bauteils, die von den metallischen Werkstoffen gebildet werden, dass im Zuge der Konversionsbehandlung im nachfolgenden Schritt ii) ein hervorragender Lackhaftgrund bereitgestellt wird. Insbesondere auf Stahloberflächen wird eine verbesserte Unterdrückung der korrosiven Unterwanderung an Defekten in der Lackbeschichtung erzielt. Zudem kann auf Stahloberflächen empirisch eine sehr geringe Varianz in den Korrosionsschutzwerten bei ansonsten gleichen Behandlungsbedingungen festgestellt werden. Damit wird mit dem erfindungsgemäßen Verfahren insgesamt eine Vereinheitlichung und höhere Zuverlässigkeit der Korrosionsschutzergebnisse über eine größere Anzahl an zu behandelnden Bauteilen erreicht.

Überraschenderweise tritt der erfindungsgemäße Erfolg weitestgehend unabhängig von der Durchführung eines der Konditionierung im Schritt i) unmittelbar nachfolgenden Spül- und/oder Trocknungsschrittes ein. Unterschiede in der Leistungsfähigkeit des Verfahren hervorgerufen durch einen dazwischenliegenden Spülschritt können regelmäßig durch eine moderate Erhöhung der Konzentration an in der wässrigen Zusammensetzung (A) gelösten und/oder dispergierten Polymer P aufgefangen werden. Die generelle Eignung des Verfahrens, die der Erfindung zugrundeliegende Aufgabe zu lösen, bleibt jedenfalls von der Durchführung eines zwischen den Verfahrensschritten i) und ii) erfolgenden Spül- und/oder Trocknungsschritt unberührt.

Ein Spülschritt dient erfindungsgemäß stets der Entfernung wasserlöslicher Rückstände, nicht fest anhaftender chemischer Verbindungen und loser Feststoffpartikel vom zu behandelnden Bauteil, die aus einem vorausgegangenem nasschemischen Behandlungsschritt mit dem auf dem Bauteil anhaftenden Nassfilm ausgeschleppt werden, mittels eines Wasser basierten Flüssigmediums. Das Wasser basierte Flüssigmedium enthält dabei keine chemischen Komponenten, die eine signifikante Oberflächenbelegung der aus metallischen Werkstoffen gefertigten Bauteile mit Nebengruppenelementen, Halbmetallelementen oder polymeren organischen Verbindungen bewirken. Eine solche signifikante Oberflächenbelegung liegt jedenfalls dann vor, wenn das Flüssigmedium der Spüle um zumindest 10 Milligramm pro Quadratmeter der gespülten Oberflächen, vorzugsweise um zumindest 1 Milligramm pro Quadratmeter der gespülten Oberflächen, an diesen Komponenten bezogen auf das jeweilige Element oder die jeweilige polymere organische Verbindung verarmt, ohne dass Zugewinne durch Überschleppung und Verluste durch Ausschleppung von auf dem Bauteil anhaftenden Nassfilmen berücksichtigt werden.

Ein Trocknungsschritt ist erfindungsgemäß jeder Verfahrensschritt, bei dem durch die Bereitstellung und Nutzung technischer Mittel eine Trocknung des wässrigen, auf der Oberfläche des Bauteils anhaftenden Flüssigfilms beabsichtigt ist, insbesondere durch Zuführung thermischer Energie oder Aufprägen einer Luftströmung.

Das in der wässrigen Zusammensetzung (A) im Schritt i) enthaltene Polymer P liegt in Wasser gelöst und/oder dispergiert vor. Insoweit vorliegend von der Anwesenheit eines Polymers sowie im generellen als auch speziellen die Rede ist, so umfasst dies faktisch stets eine Vielzahl derartiger polymerer Einzelverbindungen. Zudem weisen erfindungsgemäß organische Polymere, die die jeweilige physikalische Eigenschaft und/oder chemische Konstitution von Bedeutung aufweisen, vorliegend eine gewichtsmittlere Molmasse M_{w} von zumindest 5.000 g/mol, vorzugsweise von zumindest 10.000 g/mol, besonders bevorzugst von zumindest 20.000 g/mol, jedoch vorzugsweise von nicht mehr als 500.000 g/mol, besonders bevorzugt von nicht mehr als 200.000 g/mol, insbesondere bevorzugt von nicht mehr als 100.000 g/mol auf. Ein im Sinne der Erfindung gelöstes oder dispergiertes organisches Polymer nimmt in der wässrigen Phase einen mittleren Teilchendurchmesser von weniger als 1 µm ein. Der mittlere Teilchendurchmesser kann dabei gemäß ISO 13320:2009 mittels Laserlichtbeugung aus kumulativen Partikelgrößeverteilungen als sogenannter D50-Wert unmittelbar in der Zusammensetzung (A) bei 20 °C bestimmt werden.

In diesem Zusammenhang ist festzuhalten, dass Verbindungen, die keine organischen Polymere darstellen, gemäß vorliegender Erfindung dann als wasserlöslich gelten, wenn ihre Löslichkeit in entionisiertem Wasser (κ < 1µScm⁻¹) zumindest 1 g/L bei 20 °C beträgt.

Weiterhin sind die Repetiereinheiten R_{N} des Polymers P enthalten in der Zusammensetzung (A) so aufgebaut, dass sie einen Heterozyklus mit zumindest einem quartären Stickstoff-Heteroatom als Strukturelement aufweisen. Ein quartäres Stickstoffatom weist ausschließlich kovalente Bindungen mit Kohlenstoffatomen auf und besitzt daher eine permanente positive Ladung. Erfindungsgemäß stellen Repetiereinheiten, die sich wiederholenden Struktureinheiten einer polymeren organischen Verbindung dar, die in der jeweiligen polymeren Verbindung entweder kumuliert oder statistisch verteilt vorliegen können. Eine Struktureinheit ist Repetiereinheit einer polymeren Verbindung, wenn sie in selbiger zumindest zehnfach enthalten ist.

Das heterozyklische Strukturelement, das das quartäre Stickstoffatom aufweist, kann erfindungsgemäß Substituent des die Repetiereinheiten verknüpfenden Strukturelements der Repetiereinheit R_{N} und somit Teil der Seitenkette des Polymers P oder die Verknüpfungsstellen der Repetiereinheit R_{N} überbrücken und so selbst Teil der Hauptkette des Polymers P sein. Bevorzugt entspricht das heterozyklische Strukturelement, das das quartäre Stickstoffatom aufweist, der folgenden Strukturformel (I): 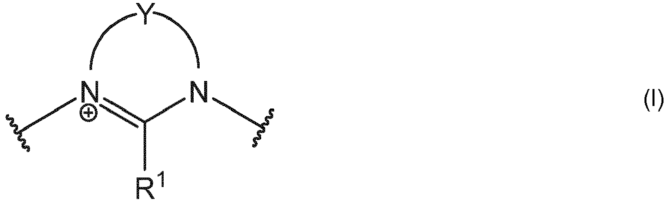
mit dem Rest R¹ ausgewählt aus Wasserstoff, verzweigten oder unverzweigten Aliphaten mit nicht mehr als 6 Kohlenstoffatomen oder dem Rest -(CR⁴R⁴)ₓ-[Z(R⁴)₍ₚ₋₁₎-(CR⁴R⁴)_{y}]ₙ-Z(R⁴)ₚ, wobei Z jeweils ausgewählt ist aus Sauerstoff oder Stickstoff und p für den Fall, dass Z Stickstoff ist, den Wert 2 annimmt und anderenfalls gleich 1 ist und x und y jeweils natürliche Zahlen von 1 bis 4 und n ebenfalls eine natürliche Zahl von 0 bis 4 ist und R⁴ ausgewählt ist aus Wasserstoff oder verzweigten oder unverzweigten Aliphaten mit nicht mehr als 6 Kohlenstoffatomen;
mit Y als ringkonstituierenden divalenten Rest, der nicht mehr als 5 Brückenatome aufweist, wobei nicht mehr als ein von Kohlenstoffatomen verschiedenes Heterobrückenatom ausgewählt aus Sauerstoff, Stickstoff oder Schwefel Brückenatom sein kann und die Kohlenstoffatome wiederum unabhängig voneinander mit Resten R¹ oder solchen Resten substituiert vorliegen, über die eine Anellierung aromatischer Homocyclen mit nicht mehr als 6 Kohlenstoffatomen realisiert ist.

In einer bevorzugten Ausführungsform sind die Repetiereinheiten R_{N} des Polymers P derart aufgebaut, dass das heterozyklische Strukturelement, dass das quartäre Stickstoffatom aufweist, im Polymer P zum einen in der Seitenkette zu finden ist und zudem bestimmte chemisch-strukturelle Eigenschaften aufweist, die in der folgenden Strukturformel (II) der Repetiereinheit R_{N} zum Ausdruck kommen: 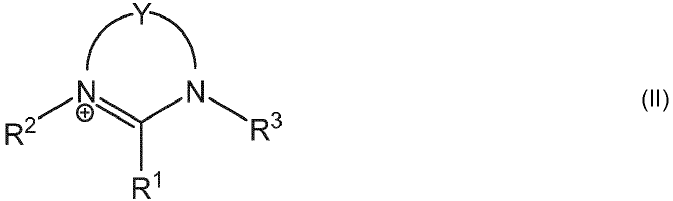
mit dem Rest R¹ ausgewählt aus Wasserstoff, verzweigten oder unverzweigten Aliphaten mit nicht mehr als 6 Kohlenstoffatomen oder dem Rest -(CR⁴R⁴)ₓ-[Z(R⁴)₍ₚ₋₁₎-(CR⁴R⁴)_{y}]ₙ-Z(R⁴)ₚ, wobei Z jeweils ausgewählt ist aus Sauerstoff oder Stickstoff und p für den Fall, dass Z Stickstoff ist, den Wert 2 annimmt und anderenfalls gleich 1 ist und x und y jeweils natürliche Zahlen von 1 bis 4 und n ebenfalls eine natürliche Zahl von 0 bis 4 ist und R⁴ ausgewählt ist aus Wasserstoff oder verzweigten oder unverzweigten Aliphaten mit nicht mehr als 6 Kohlenstoffatomen;
mit den Resten R² und R³ ausgewählt aus Resten R¹ oder dem verbleibenden Fragment der Repetiereinheit R_{N}, über das die Repetiereinheiten R_{N} untereinander oder mit anderen Repetiereinheiten R_{X} kovalent verbunden sind, mit der Maßgabe, dass entweder R² oder R³ jenes Fragment der Repetiereinheit R_{N} darstellen, vorzugsweise ist das verbleibende Fragment der Repetiereinheit R_{N} ausgewählt aus 1-Ethanyl-2-yliden, 1-Propanyliden-2-yl oder 1-Propanyl-2-yliden, wobei diese bevorzugten verbleibenden Fragmente der Repetiereinheiten R_{N} jeweils über unmittelbar miteinander kovalent gebundene Kohlenstoffatome an andere oder gleiche Repetiereinheiten kovalent gebunden sind;
mit Y als ringkonstituierenden divalenten Rest, der nicht mehr als 5 Brückenatome aufweist, wobei nicht mehr als ein von Kohlenstoffatomen verschiedenes Heterobrückenatom ausgewählt aus Sauerstoff, Stickstoff oder Schwefel Brückenatom sein kann und die Kohlenstoffatome wiederum unabhängig voneinander mit Resten R¹ oder solchen Resten substituiert vorliegen, über die eine Anellierung aromatischer Homocyclen mit nicht mehr als 6 Kohlenstoffatomen realisiert ist.

Grundsätzlich hat sich als vorteilhaft erwiesen, dass die Repetiereinheit R_{N} des Polymers P solche Substituenten trägt, die das heterocyclische Grundgerüst des Imidazols, Imidazolins, Pyrimidins, Purins und/oder Chinazolins aufweisen. In diesem Zusammenhang ist demnach bevorzugt, dass die Repetiereinheit R_{N} des Polymers P solche Substituenten gemäß der allgemeinen Strukturformel (I) trägt, deren ringkonstituierender divalenter Rest Y ausgewählt ist aus Ethylen, Ethendiyl, 1,3-Propandiyl, 1,3-Propendiyl, 1,4-Butandiyl, 1,4-Butendiyl, 1,4-Butadiendiyl, -CH=N-, -CH₂-NH-, (N,N-dimethylen)amin, (N-methylen-N-methylyliden)amin, besonders bevorzugt aus Ethendiyl, 1,4-Butadiendiyl, -C=N- oder (N-methylen-N-methylyliden)amin, ganz besonders bevorzugt aus Ethendiyl oder -C=N- und insbesondere bevorzugt aus Ethendiyl, wobei jeweils kovalent an Kohlenstoffatome gebundener Wasserstoff substituiert sein kann durch die übrigen Vertreter des Restes R¹ gemäß der allgemeinen Strukturformel (I).

Als besonders vorteilhaft haben sich solche Repetiereinheiten R_{N} des Polymers P als effektiv in der Konditionierung der Oberflächen von Bauteilen, die von metallischen Werkstoffen gebildet werden, vor einer Konversionsbehandlung erwiesen, deren Repetiereinheit R_{N} ausgewählt ist aus 1-Methyl-3-vinylimidazolium, 1-Ethyl-3-vinylimidazolium, 1-lsopropyl-3-vinylimidazolium, 1-Propyl-3-vinylimidazolium, 1-(n-butyl)-3-vinylimidazolium, 1-(lsobutyl)-3-vinylimidazolium, 1-Methoxy-3-vinylimidazolium, 1-Ethoxy-3-vinylimidazolium, 1-Propoxy-3-vinylimidazolium, besonders bevorzugt aus 1-Methyl-3-vinylimidazolium.

Die Polymere P in der Zusammensetzung (A) weisen vorzugsweise zusätzlich zumindest eine weitere Repetiereinheit R_{X} auf, die ausgewählt ist aus Vinylpyrrolidon, Vinylcaprolactam, Vinylacetat, Vinylimidazol, (Meth)acrylsäureamid, (Meth)acrylsäure, (Meth)acrylsäureestern und/oder Styrol, vorzugsweise ausgewählt aus Vinylpyrrolidon, Vinylimidazol und/oder (Meth)acrylsäureamid, besonders bevorzugt ausgewählt ist aus Vinylpyrrolidon.

Für einen hinreichend effektive Konditionierung im Schritt i) vor der Konversionsbehandlung sollte der Anteil an Repetiereinheiten R_{N} im Polymer P einen bestimmten Anteil nicht unterschreiten. Demgemäß ist es erfindungsgemäß, wenn der Gewichtsanteil der Repetiereinheiten R_{N} bezogen auf den Gesamtanteil des Polymers P zumindest 40 %, vorzugsweise zumindest 60 %, besonders bevorzugt zumindest 80 % beträgt.

Alternativ oder zugleich sollte sichergestellt sein, dass die kationische Ladungsdichte des Polymers P vorzugsweise zumindest 2 meq, besonders bevorzugt zumindest 4 meq, insbesondere bevorzugt zumindest 6 meq pro Gramm des Polymers P beträgt.

Überraschenderweise hat die Art des Gegenions zum quartären Stickstoffatom des Polymers P ebenfalls einen Einfluss auf die Konditionierung der Metalloberflächen des Bauteils. Solche Gegenionen zu den quartären Stickstoffatomen im Heterozyklus des Substituenten der Repetiereinheiten R_{N} des Polymers P haben sich als vorteilhaft und daher erfindungsgemäß bevorzugt herausgestellt, die ausgewählt sind aus Carbonat, Sulfat, Nitrat, Monoalkylsulfaten mit nicht mehr als 4 Kohlenstoffatomen, Hydroxid, Chlorid und/oder Fluorid, vorzugsweise aus Nitrat, Hydroxid, Chlorid und/oder Fluorid.

Ferner hat sich herausgestellt, dass es erfindungsgemäß generell vorteilhaft ist, wenn der Anteil des Polymers P zumindest 0,05 g/kg, vorzugsweise zumindest 0,2 g/kg, besonders bevorzugt zumindest 0,4 g/kg beträgt, jedoch vorzugsweise nicht größer als 2 g/kg jeweils bezogen auf die Zusammensetzung (A) ist. Oberhalb von 2 g/kg wird, auch wenn der Konditionierung im Schritt i) ein Spülschritt folgt, keine weitere Verbesserung des Korrosionsschutzes nach Lackaufbau beobachtet, so dass jede darüberhinausgehende Menge des Polymers P im erfindungsgemäßen Verfahren unwirtschaftlich eingesetzt wäre. Zusätzlich kann für bestimmte Werkstoffe, beispielsweise Aluminium, beobachtet werden, dass höhere Gehalte sich nachteilig auf die Lackhaftung auswirken können, so dass die erfindungsgemäß angestrebte Vereinheitlichung der Korrosionsschutzes auf einer Vielzahl von metallischen Werkstoffen durch höhere Gehalte des Polymers P in der Zusammensetzung (A) gefährdet wird.

Der pH-Wert der Zusammensetzung (A) im Schritt i) kann weitestgehend frei gewählt werden und liegt üblicherweise im Bereich von 2 bis 14, vorzugsweise oberhalb von 3,0, besonders bevorzugt oberhalb von 4,0, insbesondere bevorzugt oberhalb von 5,0, jedoch vorzugsweise unterhalb von 12,0, besonders bevorzugt unterhalb von 10,0 und insbesondere bevorzugt unterhalb von 8,0.

Jedoch existiert für bestimmte Varianten des erfindungsgemäßen Verfahrens ein bevorzugtes Fenster für den pH-Wert. Für Bauteile, deren Oberflächen, die von metallischen Werkstoffen gebildet sind, von Ziehfetten, Korrosionsschutzölen oder Korrosionsprodukten verunreinigt sind, kann die Zusammensetzung (A) zur Konditionierung im Schritt i) so formuliert sein, dass zusätzlich eine Reinigung und damit verbunden eine Beize der Metalloberflächen herbeigeführt wird. In einem derartigen erfindungsgemäßen Verfahren liegt der pH-Wert vorzugsweise entweder im Bereich von 2 bis 4,5 oder im Bereich von 9 bis 14. Die Bereitstellung einer alkalischen Zusammensetzung (A) ist jedoch bevorzugt, um eine Konditionierung der Oberflächen der metallischen Werkstoffe mit einer Reinigung zu kombinieren.

Ist eine Reinigung im Schritt i) des erfindungsgemäßen Verfahrens nicht erforderlich, so ist wiederum ein pH-Wert im Bereich von 5,0 bis 8,0 bevorzugt, in dem die metallischen Werkstoffe Zink und Stahl niedrige Korrosionsraten aufweisen und auf den Zusatz stark alkalisch oder stark sauer reagierender Zusatzstoffe verzichtet werden kann.

Die Zusammensetzung (A) kann demnach erfindungsgemäß weitere Komponenten enthalten. Neben den pH-Wert regulierenden Substanzen können dies auch oberflächenaktive Substanzen sein, deren Einsatz in einer Zusammensetzung (A) mit reinigender Wirkung bevorzugt ist. Darüber hinaus kann es vorteilhaft für die Behandlung von Bauteilen sein, die Oberflächen der Werkstoffe Zink und/oder verzinkten Stahl aufweisen, dass die Zusammensetzung (A) zusätzlich eine Menge an Eisen-Ionen enthält, die bei Kontakt mit den Zinkoberflächen dort eine dünne Schichtauflage an Eisen bewirkt und so zusätzlich zur Vereinheitlichung des Korrosionsschutzes beiträgt, der im erfindungsgemäßen Verfahren insbesondere für Oberflächen des Werkstoffes Eisen zugänglich ist. Eine solche Vereisenung kann gemäß der Lehre der WO 2008135478 A1 im sauren Milieu vorzugsweise in Anwesenheit eines Reduktionsmittels oder gemäß der Lehre der WO 2011098322 A1 im alkalischen Milieu vorzugsweise in Anwesenheit von Komplexbildnern und Phosphat-Ionen erfolgen.

Jedoch ist es bevorzugt, wenn die Zusammensetzung (A) im Schritt i) des erfindungsgemäßen Verfahrens insgesamt weniger als 500 ppm, besonders bevorzugt weniger als 100 ppm, insbesondere bevorzugt weniger als 50 ppm an gelösten und/oder dispergierten organischen Polymeren enthält, die kein Polymer P darstellen. Hierdurch wird gewährleistet, dass die Wechselwirkung derartiger Polymere mit den Oberflächen der metallischen Werkstoffe des Bauteils nicht mit derjenigen der Polymere P in Konkurrenz tritt und dadurch den gewünschten Effekt der Konditionierung entgegenwirkt.

Zudem enthält die Zusammensetzung (A) im Schritt i) zur Verhinderung der Ausbildung einer Konversionsschicht auf den Oberflächen der metallischen Werkstoffe des Bauteils vorzugsweise jeweils weniger als 0,005 g/kg, besonders bevorzugt jeweils weniger als 0,001 g/kg an wasserlöslichen Verbindungen der Elemente Zr, Ti und/oder Si bezogen auf das jeweilige Element, vorzugsweise weniger als 1 g/kg an wasserlöslichen Verbindungen der Elemente Zn, Mn und Ca bezogen auf das jeweilige Element und/oder vorzugsweise weniger als 0,05 g/kg, besonders bevorzugt weniger als 0,01 g/kg an freiem Fluorid bestimmt mit einer Fluorid-sensitiven Elektrode bei 20 °C.

In einem bevorzugten erfindungsgemäßen Verfahren enthält die Zusammensetzung (A) daher keine Komponenten in einer solchen Menge, die es vermögen, während des für die Konditionierung im Schritt i) vorgesehenen Zeitraums eine Konversionsschicht auf einer Oberfläche des Bauteils auszubilden, die von einem metallischen Werkstoff gebildet wird. Eine Konversionsschicht im Sinne der vorliegenden Erfindung liegt dann vor, wenn auf der jeweiligen Oberfläche des metallischen Werkstoffs eine Deckschicht nasschemisch erzeugt wird, die Phosphate, Oxide und/oder Hydroxide von Elementen der Titan-Gruppe, Vanadium-Gruppe und/oder Chrom-Gruppe oder Phosphate der Elemente Kalzium, Eisen und/oder Zink in einer Schichtauflage von zumindest 5 mg/m² bezogen auf das jeweilige Nebengruppenelement bzw. von zumindest 50 mg/m² gezogen auf das Element Phosphor enthält.

Im Verfahrensschritt ii) sollte eine zur Ausbildung einer Konversionsschicht ausreichende Menge an Wirkkomponenten in der sauren wässrigen Zusammensetzung (B) enthalten sein. Diesbezüglich ist es vorteilhaft, wenn die Zusammensetzung (B) im Schritt ii) zumindest 0,01 g/kg, vorzugsweise zumindest 0,02 g/kg einer wasserlöslichen Verbindungen der Elemente Zr, Ti oder Si bezogen auf das Element Zr, Ti oder Si enthält.

Aus wirtschaftlichen Überlegungen heraus ist es weiterhin vorteilhaft, wenn der Gesamtanteil dieser Verbindungen bezogen auf die Elemente Zr, Ti und Si vorzugsweise nicht größer als 0,5 g/kg ist, da höhere Gehalte üblicherweise die korrosionsschützenden Eigenschaften der Konversionsschicht nicht weiter verbessern, aber aufgrund der höheren Abscheidekinetik die Kontrolle des Schichtauflage bezüglich dieser Elemente erschweren.

Geeignete Vertreter der wasserlöslichen Verbindungen der Elemente Zr, Ti oder Si sind Verbindungen, die in wässriger Lösung in Anionen von Fluorokomplexen dissozieren. Solche bevorzugten Verbindungen sind beispielsweise H₂ZrF₆, K₂ZrF₆, Na₂ZrF₆ und (NH₄)₂ZrF₆ und die analogen Titan- und Silizium-Verbindungen. Auch fluorfreie Verbindungen der Elemente Zr, Ti oder Si, insbesondere der Elemente Zr oder Ti, können als wasserlösliche Verbindungen erfindungsgemäß eingesetzt werden, beispielsweise (NH₄)₂Zr(OH)₂(CO₃)₂ oder TiO(SO₄) oder Silane mit zumindest einer kovalenten Si-O Bindung.

Obwohl mit der vorgelagerten Konditionierung im Schritt i) auch geringe Schichtgewichte bei der Konversionsschichtbildung für einen guten Korrosionsschutz genügen, ist es generell vorteilhaft, wenn die Zusammensetzung (B) eine Quelle für Fluorid-Ionen, vorzugsweise ausgewählt aus komplexen oder einfachen Fluoriden, enthält. Unter einfachen Fluoriden versteht der Fachmann Fluorwasserstoffsäure sowie deren Salze wie Alkalifluoride, Ammoniumfluorid oder Ammoniumbifluorid, während komplexe Fluoride erfindungsgemäß Koordinationsverbindungen darstellen, in denen Fluoride als Liganden eines oder mehrerer Zentralatome koordiniert vorliegen. Demgemäß sind bevorzugte Vertreter der komplexen Fluoride, die zuvor genannten Fluor-haltigen Komplexverbindungen der Elemente Zr, Ti oder Si.

Der Anteil an Komponenten, die eine Quelle für Fluorid-Ionen darstellen, ist in der Zusammensetzung (B) bevorzugt so groß, dass eine Menge an freiem Fluorid von zumindest 0,05 g/kg, jedoch vorzugsweise von nicht mehr als 0,4 g/kg gemessen mit einer Fluorid-sensitiven Elektrode bei 20 °C resultiert.

In Kombination mit der Konditionierung im Schritt i) werden die besten Resultate hinsichtlich des Korrosionsschutzes erzielt, wenn in der Zusammensetzung (B) im Schritt ii) Kupfer-Ionen enthalten sind. In einer besonders bevorzugten Ausführungsform des erfindungsgemäßen Verfahrens enthält die Zusammensetzung (B) daher zusätzlich wasserlösliche Verbindungen, die eine Quelle für Kupfer-Ionen darstellen, vorzugsweise in Form wasserlöslicher Salze, beispielsweise Kupfersulfat, Kupfernitrat und Kupferacetat.

Der Gehalt an Kupfer aus wasserlöslichen Verbindungen beträgt in der Zusammensetzung (B) vorzugsweise zumindest 0,001 g/kg, besonders bevorzugt zumindest 0,005 g/kg. Jedoch liegt der Gehalt an Kupfer-Ionen vorzugsweise nicht oberhalb von 0,1 g/kg, besonders bevorzugt nicht oberhalb von 0,05 g/kg, da anderenfalls die Abscheidung elementaren Kupfers gegenüber der Konversionsschichtbildung zu dominieren beginnt.

Der pH-Wert der sauren wässrigen Zusammensetzung (B) liegt vorzugsweise im Bereich von 2,5 bis 5,0, besonders bevorzugt im Bereich von 3,5 bis 4,5.

Weiterhin ist bevorzugt, wenn die Zusammensetzung (B) Nitrat-Ionen als Beschleuniger der Konversionsschichtbildung enthält, wobei der Anteil an Nitrat-Ionen vorzugsweise zumindest 0,5 g/kg beträgt, jedoch aus Gründen der Wirtschaftlichkeit vorzugsweise 4 g/kg nicht überschreitet.

Die Bauteile, die im erfindungsgemäßen Verfahren behandelt werden, bestehen zumindest teilweise aus metallischen Werkstoffen. Bevorzugte metallische Werkstoffe, für die eine Verbesserung der Eigenschaften der Konversionsschicht als Lackhaftgrund zu wirken deutlich zu Tage tritt, sind Eisen und Legierungen von Eisen, insbesondere Stahl, wobei auch Zink, verzinkter Stahl und Aluminium sowie die Legierungen der Werkstoffe Zink und Aluminium im erfindungsgemäßen Verfahren mit einer qualitativ hochwertigen Konversionsschicht versehen werden. Als Legierungen dieser Werkstoffe gelten in diesem Zusammenhang Werkstoffe, die zumindest 50 At.-% der Elemente des jeweiligen Werkstoffes als Legierungsbestandteil aufweisen. Auf Oberflächen von Eisen und seinen Legierungen tritt eine signifikante Verbesserung des Korrosionsschutzes in der korrosiven Unterwanderung an Lackierdefekten auf, die sogar weitestgehend unabhängig davon eintritt, ob unmittelbar nach der Konditionierung im Schritt i) ein Spül- und/oder Trocknungsschritt folgt.

In einer bevorzugten Ausführungsform des erfindungsgemäßen Verfahrens weist das Bauteil daher zumindest teilweise Oberflächen der Werkstoffe Eisen und/oder Stahl auf, wobei vorzugsweise zumindest 50 %, besonders bevorzugt zumindest 80 % der Oberfläche des Bauteils, die Oberflächen von metallischen Werkstoffen sind, aus Oberflächen der Werkstoffe Eisen und/oder Stahl gebildet werden.

Enthalten die Bauteile zum Teil Oberflächen von Zink und verzinktem Stahl, so ist zu beobachten, dass für den Fall eines sich der Konditionierung unmittelbar nachfolgenden Spülschrittes eine stärkere Varianz hinsichtlich des Korrosionsschutzes auf diesen Oberflächen eintritt. Diese höhere Varianz kann allerdings dadurch wieder nivelliert werden, dass eine vergleichsweise höhere Konzentration an Polymer P in der Zusammensetzung (A) in der Konditionierung - also im Verfahrensschritt i) - gewählt wird.

Enthält das Bauteil auch Oberflächen des Werkstoffes Aluminium kann eine höhere Konzentration an Polymeren P in der Zusammensetzung (A) der Konditionierung eine Verschlechterung der Korrosionswerte auf den Aluminiumoberflächen bewirken.

Grundsätzlich werden jedoch auch Verbundkonstruktionen und insbesondere Bauteile, die neben Oberflächen der Werkstoffe Eisen und/oder Stahl auch Oberflächen der Werkstoffe Zink und/oder verzinkter Stahl sowie Aluminium aufweisen, im erfindungsgemäßen Verfahren mit dem Ergebnis behandelt werden, dass ein deutlich verbesserter Korrosionsschutz und eine geringere Varianz in den Korrosionsschutzwerten auf den Oberflächen der Werkstoffe Eisen und/oder Stahl resultiert, während die Konditionierung sich auf den Oberflächen der übrigen metallischen Werkstoffe nicht negativ auf den Korrosionsschutzwirkung der Konversionsschicht auf Basis der Elemente Zr, Ti und/oder Si auswirkt. Diese Eigenschaft des erfindungsgemäßen Verfahrens auf den zuvor genannten metallischen Oberflächen die Ausbildung homogener dünner vor Korrosion schützender Konversionsschichten zu gewährleisten, ist bei der Oberflächenbehandlung von Automobilkarosserien von großer Bedeutung, da selbige regelmäßig derartige Werkstoffkombinationen, die durch Fügetechniken wie Punktschweißen, Falzen oder stoffschlüssiges Kleben miteinander verbunden sind, aufweisen.

In einer bevorzugten Ausführungsform enthält das Bauteil daher neben Oberflächen der Werkstoffe Eisen und/oder Stahl und Oberflächen der Werkstoffe Zink und/oder verzinkter Stahl vorzugsweise auch Oberflächen des Werkstoffs Aluminium, wobei vorzugsweise nach der Konditionierung im Schritt i) und vor der Konversionsbehandlung im Schritt ii) ein Spülschritt und besonders bevorzugt sowohl ein Spül- und Trocknungsschritt unterbleibt, wobei vorzugsweise zusätzlich der Anteil an gelösten und/oder dispergierten Polymer P in der wässrigen Zusammensetzung (A) nicht größer als 1,2 g/kg, besonders bevorzugt nicht größer als 0,8 g/kg ist.

Weiterhin ist es generell für den Fall, dass das Bauteil Oberflächen der Werkstoffe Zink und/oder verzinkten Stahl aufweist, bevorzugt, dass selbige Oberflächen mit einer dünnen amorphen Schicht enthaltend Eisen beaufschlagt sind, so dass den Oberflächen dieser Werkstoffe eine ebenso wirksame Konditionierung im Schritt i) des erfindungsgemäßen Verfahrens zuteilwird, wie sie für die Oberflächen der Werkstoffe Eisen und/oder Stahl üblicherweise festgestellt wird. Eine diesbezüglich besonders effektive Vereisenung der Oberflächen von Zink und/oder verzinkten Stahl wird in den Offenlegungsschriften WO 2011098322 A1 und WO 2008135478 A1 jeweils als nasschemisches Verfahren beschrieben, das in äquivalenter Weise unmittelbar vor der Durchführung des erfindungsgemäßen Verfahrensschritt i) angewandt werden kann. Insofern ist es für erfindungsgemäße Verfahren, bei denen das Bauteil zumindest teilweise aus den Werkstoffen Zink und/oder verzinkter Stahl aufweist, bevorzugt, dass die Oberflächen des Bauteils, die aus diesen Werkstoffen gefertigt sind, eine Eisenbelegung von zumindest 20 mg/m², jedoch vorzugsweise von nicht mehr als 150 mg/m² aufweisen.

### Ausführungsbeispiele:

Im Folgenden werden Bleche von Stahl (CRS), verzinktem Stahl (HDG) und Aluminium jeweils unabhängig voneinander einem mehrstufigen Verfahren zur korrosionsschützenden Vorbehandlung unterzogen. Die Eignung derart vorbehandelter und mit einer Lackschicht versehenen Metallbleche, einen guten Lackhaftgrund darzustellen, wird in jeweils materialspezifischen Korrosionstests abgeprüft.

Das allgemeine Verfahren zur Vorbehandlung und Beschichtung besteht aus den aufeinanderfolgenden obligaten und fakultativen Einzelschritten A)-E):
A) Alkalische Reinigung und Entfettung:
   Eintauchen des Bleches unter Rühren in einen alkalischen Reiniger zusammengesetzt aus 4 Gew.-%iger Ridoline® 2011 (Fa. Henkel) und 0,5 Gew.-%iger Ridosol® 1561 (Fa. Henkel) für 3 Minuten bei 60 °C bei Aluminiumsubstraten sowie für 5 Minuten bei 60°C bei Stählen sowie verzinkten Stählen;
B) Spüle mit Brauchwasser und anschließend mit entionisiertem Wasser (κ < 1µScm⁻¹) bei jeweils 20 °C;
C) Konditionierung durch Eintauchen des Bleches unter Rühren für 1 Minute bei 35 °C in eine Zusammensetzung enthaltend eine vorgegebene Menge eines organischen Polymers in entionisertem Wasser (κ < 1µScm⁻¹) ohne weitere Zugabe pH-Wert verändernder Substanzen;
D) ggf. Spüle mit entionisertem Wasser bei 20 °C (κ < 1µScm⁻¹)
E) Konversionsbehandlung durch Eintauchen des Bleches unter Rühren für 3 Minuten bei 35 °C in eine wässrige Zusammensetzung mit einem pH-Wert von 4,0 enthaltend
   0,34 g/kg an H₂ZrF₆
   0,10 g/kg an CuSO₄
   3,0 g/kg an Nitrat-Ionen aus Natriumnitrat
   und einer solchen Menge an (NH₄)HF₂, die ausreicht um einen freiem Fluorid-Gehalt von 23 mg/kg gemessen mit einer Fluorid-sensitiven Elektrode bei 20 °C einzustellen, dabei wird eine potentiometrische Messkette (Fa. WTW, inoLab®, pH/IonLevel 3) eingesetzt, die die Fluorid-sensitive Glaselektrode (Fa. WTW, F501) und eine Referenzelektrode (Fa. WTW, R503) enthält und eine Drei-Punkt-Kalibrierung mittels Kalibrierlösungen mit einem Gehalt von 10 mg/kg, 100 mg/kg und 1000 mg/kg an freiem Fluorid, hergestellt aus dem Titrisol® Fluorid-Standard der Fa. Merck ohne Pufferzusatz, vorgenommen.

Nach der Konversionsbehandlung im Verfahrensschritt E) wurden sämtliche Bleche zunächst mit entionisiertem Wasser (κ < 1µScm⁻¹) bei 20 °C gespült und anschließend mit einem kathodischen Tauchlack beschichtet und bei 180°C getrocknet (Trockenschichtdicke: 18-20 µm; CathoGuard® 800 der Fa. BASF Coatings).

In der nachfolgenden Tabelle 1 sind die verschiedenen in der Konditionierung im Schritt C) verwendeten polymerhaltigen Zusammensetzungen wiedergegeben.

Die Zusammensetzungen C5 und C6 in der Tabelle 1 sind nicht erfindungsgemäß.

| Tab. 1 | | | |
|---|---|---|---|
| Verwendete Zusammensetzungen in der Konditionierung; pH-Wert ca. 5,0 - 5,6 | | | |
| | Polymer P | | |
| | Menge in mg/kg | Monomere | Molares Verhältnis (QVI : VP) |
| C1 | 2000 | 1-Methyl-3-vinylimidazolium (QVI); Vinylpyrrolidon (VP) | 95 : 5 |
| C2 | 1000 | 1-Methyl-3-vinylimidazolium (QVI); Vinylpyrrolidon (VP) | 95 : 5 |
| C3 | 500 | 1-Methyl-3-vinylimidazolium (QVI); Vinylpyrrolidon (VP) | 95 : 5 |
| C4 | 100 | 1-Methyl-3-vinylimidazolium (QVI); Vinylpyrrolidon (VP) | 95 : 5 |
| C5 | 2000 | 1-Methyl-3-vinylimidazolium (QVI); Vinylpyrrolidon (VP) | 30 : 70 |
| C6 | 1000 | CELQUAT® SC-240C (AkzoNobel N.V.) | - |

Die Korrosionsergebnisse und die jeweils dazugehörige Verfahrensabfolge sind in der Tabelle 2 angegeben. Es wird deutlich, dass auf Stahlblechen im Vergleich zu einer reinen Konversionsbehandlung (Nr. 10) deutlich verbesserte Ergebnisse hinsichtlich Unterwanderung nach Auslagerung im Wechselklimatest und Steinschlagprüfung erzielt werden, wenn eine Konditionierung nach der Art der vorliegenden Erfindung durchgeführt wird (Nr. 1-8). Insbesondere für solche polymerhaltige Zusammensetzungen in der Konditionierung C), in denen der relative Anteil an heterozyklischen Struktureinheiten mit quartären Stickstoffatomen im Polymer verhältnismäßig hoch ist, können hervorragende Korrosionsschutzergebnisse auf Stahl und Aluminium erzielt werden (Vgl. Nr. 1 bis Nr.4).

Umgekehrt belegt Beispiel Nr.9, dass nicht jedes Polymer, das Substituenten mit quartären Stickstoffatomen trägt, eine erfolgreiche Konditionierung der Metalloberfläche für die nachfolgende Konversionsbehandlung in Aussicht stellen kann. Das Polymer C6 in der Konditionierung zu Beispiel Nr.9 ist eine modifizierte Cellulose, in der Tetraalkylammonium-Struktureinheiten über Polyetherbrücken an das Cellulose-Grundgerüst gebunden sind.

Die Konzentrationsabhängigkeit der Konditionierung zeigt tendenziell, dass höherer Anteile an Polymeren in Verfahren, in denen der Konditionierung unmittelbar eine Spüle mit entionisierten Wasser folgt, vorteilhaft sind, für die Aufrechterhaltung guter Korrosionswerte auf verzinktem Stahl (Vgl. Nr. 8 und Nr. 3 sowie Nr. 7 und Nr. 2). Auf den Stahlsubstraten kann festgestellt werden, dass eine nachgelagerte Spüle bei gleicher Konditionierung für den Korrosionsschutz leicht vorteilhaft ist (Vgl. Nr. 8 und Nr. 3 sowie Nr. 7 und Nr. 2). Das Optimum für das Substrat Aluminium liegt unabhängig davon, ob nach der Konditionierung gespült wird, eher bei mittleren Gehalten der Copolymere auf Basis von Imidazolium (siehe Nr. 3 und Nr. 7).

Die Beispiele Nr.5, Nr.9 und Nr.10 in der Tabelle 2 sind nicht erfindungsgemäß.

| Tab. 2 | | | | | | | | | |
|---|---|---|---|---|---|---|---|---|---|
| Korrosionsergebnisse auf den entsprechend vorbehandelten und tauchlackierten Blechen | | | | | | | | | |
| Nr. | Verfahrensfolge | CRS | | | HDG | | | AI⁴ | |
| | | Korrosion¹ | Enthaftung² | Steinschlag³ | Korrosion¹ | Enthaftung² | Steinschlag³ | Maximale Fadenlänge | Mittlere Fadenlänge |
| 1 | A-B-C1-D-E | 0,6 | 0,6 | 2,2 | 4,4 | 4,4 | 3,7 | 1,6 | 0,3 |
| 2 | A-B-C2-D-E | 0,5 | 0,5 | 2,5 | 4,7 | 4,7 | 4,0 | 1,6 | 0,2 |
| 3 | A-B-C3-D-E | 0,5 | 0,5 | 2,0 | 6,1 | 6,1 | 4,0 | 1,4 | 0,3 |
| 4 | A-B-C4-D-E | 0,6 | 0,6 | 2,3 | 5,0 | 5,0 | 3,8 | 1,7 | 0,3 |
| 5 | A-B-C5-D-E | 0,8 | 0,8 | 3,7 | 4,2 | 4,2 | 4,0 | 1,1 | 0,1 |
| 6 | A-B-C1-E | 0,6 | 0,6 | 2,3 | 4,2 | 4,2 | 3,8 | 2,9 | 0,7 |
| 7 | A-B-C2-E | 0,6 | 0,6 | 2,7 | 4,1 | 4,1 | 4,0 | 1,3 | 0,3 |
| 8 | A-B-C3-E | 0,6 | 0,6 | 2,8 | 3,8 | 3,8 | 3,7 | 1,7 | 0,2 |
| 9 | A-B-C6-E | 1,1 | 2,3 | 5,0 | 4,8 | 4,8 | 4,8 | - | - |
| 10 | A-B-E | 1,0 | 1,3 | 3,0 | 4,4 | 4,4 | 4,2 | 1,4 | 0,1 |
| 1 | Korrosion am Schnitt in mm gemäß DIN EN ISO 4628-8, nach Auslagerung im Wechselklima-Test VW gemäß PV 1210 | | | | | | | | |
| 2 | Enthaftung am Schnitt in mm gemäß DIN EN ISO 4628-8, nach Auslagerung im Wechselklima-Test VW gemäß PV 1210 | | | | | | | | |
| 3 | Steinschlag-Prüfung gemäß DIN EN ISO 20567-1, vor und nach Auslagerung im Wechselklima-Test VW gemäß PV 1210 | | | | | | | | |
| 4 | Fadenlängen in mm gemäß Daimler PAPP PWT 3002, nach Auslagerung im Filiform-Korrosionstest gemäß DIN EN 3665 | | | | | | | | |

## Patentansprüche

1. Mehrstufiges Verfahren zur korrosionsschützenden Vorbehandlung von zumindest teilweise aus metallischen Werkstoffen gefertigten Bauteilen, bei dem zunächst
i) zumindest ein Teil der Oberflächen des Bauteils, die von den metallischen Werkstoffen gebildet werden, mit einer wässrigen Zusammensetzung (A) enthaltend ein gelöstes und/oder dispergiertes organisches Polymer P, das zu einem Gewichtsanteil von zumindest 40 % bezogen auf den Gesamtanteil des Polymers P aus solchen Repetiereinheiten R_{N} aufgebaut ist, die als Strukturelement einen Heterozyklus mit zumindest einem quartären Stickstoff-Heteroatom aufweisen,
und anschließend
ii) zumindest derselbe Teil der Oberflächen des Bauteils, die von den metallischen Werkstoffen gebildet werden, mit oder ohne dazwischenliegendem Spül- und/oder Trocknungsschritt mit einer sauren wässrigen Zusammensetzung (B) enthaltend ein oder mehrere wasserlösliche Verbindungen der Elemente Zr, Ti und/oder Si in Kontakt gebracht wird.

2. Verfahren nach Anspruch 1, **dadurch gekennzeichnet, dass** das Strukturelement der Repetiereinheit RN des Polymers P, das den Heterozyklus mit zumindest einem quartären Stickstoff-Heteroatom aufweist, folgender Strukturformel (I) entspricht: 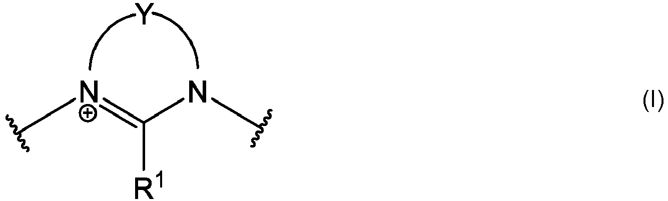
mit dem Rest R¹ ausgewählt aus Wasserstoff, verzweigten oder unverzweigten Aliphaten mit nicht mehr als 6 Kohlenstoffatomen oder dem Rest -(CR⁴R⁴)ₓ-[Z(R⁴)₍ₚ₋₁₎-(CR⁴R⁴)_{y}]ₙ-Z(R⁴)ₚ, wobei Z jeweils ausgewählt ist aus Sauerstoff oder Stickstoff und p für den Fall, dass Z Stickstoff ist, den Wert 2 annimmt und anderenfalls gleich 1 ist und x und y jeweils natürliche Zahlen von 1 bis 4 und n ebenfalls eine natürliche Zahl von 0 bis 4 ist und R⁴ ausgewählt ist aus Wasserstoff oder verzweigten oder unverzweigten Aliphaten mit nicht mehr als 6 Kohlenstoffatomen;
mit Y als ringkonstituierenden divalenten Rest, der nicht mehr als 5 Brückenatome aufweist, wobei nicht mehr als ein von Kohlenstoffatomen verschiedenes Heterobrückenatom ausgewählt aus Sauerstoff, Stickstoff oder Schwefel Brückenatom sein kann und die Kohlenstoffatome wiederum unabhängig voneinander mit Resten R¹ oder solchen Resten substituiert vorliegen, über die eine Anellierung aromatischer Homocyclen mit nicht mehr als 6 Kohlenstoffatomen realisiert ist.

3. Verfahren nach einem oder beiden der vorherigen Ansprüche, **dadurch gekennzeichnet, dass** die Repetiereinheiten R_{N} des Polymers P folgender Strukturformel (II) entsprechen: 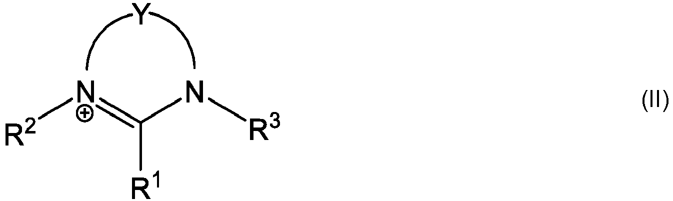
mit dem Rest R¹ ausgewählt aus Wasserstoff, verzweigten oder unverzweigten Aliphaten mit nicht mehr als 6 Kohlenstoffatomen oder dem Rest -(CR⁴R⁴)ₓ-[Z(R⁴)₍ₚ₋₁₎-(CR⁴R⁴)_{y}]ₙ-Z(R⁴)ₚ, wobei Z jeweils ausgewählt ist aus Sauerstoff oder Stickstoff und p für den Fall, dass Z Stickstoff ist, den Wert 2 annimmt und anderenfalls gleich 1 ist und x und y jeweils natürliche Zahlen von 1 bis 4 und n ebenfalls eine natürliche Zahl von 0 bis 4 ist und R⁴ ausgewählt ist aus Wasserstoff oder verzweigten oder unverzweigten Aliphaten mit nicht mehr als 6 Kohlenstoffatomen;
mit den Resten R² und R³ ausgewählt aus Resten R¹ oder dem verbleibenden Fragment der Repetiereinheit R_{N}, über das die Repetiereinheiten R_{N} untereinander oder mit anderen Repetiereinheiten R_{X} kovalent verbunden sind, mit der Maßgabe, dass entweder R² oder R³ jenes Fragment der Repetiereinheit R_{N} darstellen;
mit Y als ringkonstituierenden divalenten Rest, der nicht mehr als 5 Brückenatome aufweist, wobei nicht mehr als ein von Kohlenstoffatomen verschiedenes Heterobrückenatom ausgewählt aus Sauerstoff, Stickstoff oder Schwefel Brückenatom sein kann und die Kohlenstoffatome wiederum unabhängig voneinander mit Resten R¹ oder solchen Resten substituiert vorliegen, über die eine Anellierung aromatischer Homocyclen mit nicht mehr als 6 Kohlenstoffatomen realisiert ist.

4. Verfahren nach einem der Ansprüche 2 oder 3, **dadurch gekennzeichnet, dass** der ringkonstituierende divalente Rest Y ausgewählt aus Ethylen, Ethendiyl, 1,3-Propandiyl, 1,3-Propendiyl, 1,4-Butandiyl, 1,4-Butendiyl, 1,4-Butadiendiyl, -CH=N-, - CH₂-NH-, (N,N-dimethylen)amin, (N-methylen-N-methylyliden)amin, bevorzugt aus Ethendiyl, 1,4-Butadiendiyl, -C=N- oder (N-methylen-N-methylyliden)amin, besonders bevorzugt aus Ethendiyl oder -C=N- und insbesondere bevorzugt aus Ethendiyl, wobei jeweils kovalent an Kohlenstoffatome gebundener Wasserstoff substituiert sein kann durch die übrigen Vertreter des Restes R¹

5. Verfahren nach einem der oder mehreren der vorherigen Ansprüche **dadurch gekennzeichnet, dass** die Repetiereinheit R_{N} ausgewählt ist aus 1-Methyl-3-vinylimidazolium, 1-Ethyl-3-vinylimidazolium, 1-Isopropyl-3-vinylimidazolium, 1-Propyl-3-vinylimidazolium, 1-(n-butyl)-3-vinylimidazolium, 1-(Isobutyl)-3-vinylimidazolium, 1-Methoxy-3-vinylimidazolium, 1-Ethoxy-3-vinylimidazolium, 1-Propoxy-3-vinylimidazolium, vorzugsweise aus 1-Methyl-3-vinylimidazolium.

6. Verfahren nach einem oder beiden der vorherigen Ansprüche, **dadurch gekennzeichnet, dass** das Polymer P zumindest eine weitere Repetiereinheit R_{X} ausgewählt aus Vinylpyrrolidon, Vinylcaprolactam, Vinylacetat, Vinylimidazol, (Meth)acrylsäureamid, (Meth)acrylsäure, (Meth)acrylsäureestern und/oder Styrol, vorzugsweise ausgewählt aus Vinylpyrrolidon, Vinylimidazol und/oder (Meth)acrylsäureamid enthält.

7. Verfahren nach einem oder mehreren der vorherigen Ansprüche, **dadurch gekennzeichnet, dass** der Gewichtsanteil der Repetiereinheiten R_{N} bezogen auf den Gesamtanteil des Polymers P zumindest 60 %, vorzugsweise zumindest 80 % beträgt.

8. Verfahren nach einem oder mehreren der vorherigen Ansprüche, **dadurch gekennzeichnet, dass** der Anteil des Polymers P an der Zusammensetzung (A) zumindest 0,05 g/kg, vorzugsweise zumindest 0,2 g/kg, besonders bevorzugt zumindest 0,4 g/kg beträgt, jedoch vorzugsweise nicht größer als 2 g/kg ist.

9. Verfahren nach einem oder mehreren der vorherigen Ansprüche, **dadurch gekennzeichnet, dass** auf den Oberflächen der metallischen Bauteile im Schritt i) keine Konversionsschicht erzeugt wird.

10. Verfahren nach einem oder mehreren der vorherigen Ansprüche, **dadurch gekennzeichnet, dass** die Zusammensetzung (B) im Schritt ii) eine Quelle für Fluoridlonen, vorzugsweise ausgewählt aus komplexen oder einfachen Fluoriden enthält.

11. Verfahren nach einem oder mehreren der vorherigen Ansprüche, **dadurch gekennzeichnet, dass** die Zusammensetzung (B) im Schritt ii) zusätzlich wasserlösliche Verbindungen enthält, die eine Quelle für Kupfer-Ionen darstellen, vorzugsweise in Form wasserlöslicher Salze.

12. Verfahren gemäß einem oder mehreren der vorherigen Ansprüche, **dadurch gekennzeichnet, dass** zwischen den Verfahrensschritten i) und ii) kein Spülschritt, vorzugsweise weder ein Spülschritt noch ein Trocknungsschritt erfolgt.

13. Verfahren nach einem oder mehreren der vorherigen Ansprüche, **dadurch gekennzeichnet, dass** das Bauteil zumindest teilweise Oberflächen der Werkstoffe Eisen und/oder Stahl aufweist und vorzugsweise zumindest 50 %, besonders bevorzugt zumindest 80 % der Oberfläche von metallischen Werkstoffen des Bauteils aus Oberflächen der Werkstoffe Eisen und/oder Stahl gebildet wird.

14. Verfahren gemäß einem oder mehreren der vorherigen Ansprüche, **dadurch gekennzeichnet, dass** das Bauteil neben Oberflächen der Werkstoffe Eisen und/oder Stahl auch Oberflächen der Werkstoffe Zink und/oder verzinkter Stahl und vorzugsweise auch Oberflächen des Werkstoffs Aluminium aufweist.

15. Verfahren nach einem oder mehreren der vorherigen Ansprüche, **dadurch gekennzeichnet, dass** die Oberflächen der Werkstoffe Zink und/oder verzinkter Stahl eine Eisenbelegung von zumindest 20 mg/m² aufweisen.

## Claims

1. A multi-stage method for the anti-corrosion pretreatment of components manufactured at least in part from metal materials, in which firstly
i) at least part of the surfaces of the component that are formed by the metal materials is brought into contact with an aqueous composition (A) containing a dissolved and/or dispersed organic polymer P, of which a weight proportion of at least 40%, based on the total proportion of the polymer P, is composed of repeating units R_{N} which have, as a structural element, a heterocycle comprising at least one quaternary nitrogen heteroatom, and secondly
ii) at least the same part of the surfaces of the component that are formed by the metal materials is brought into contact, with or without an intermediate rinsing and/or drying step, with an acidic aqueous composition (B) containing one or more water-soluble compounds of the elements Zr, Ti and/or Si.

2. The method according to claim 1, **characterized in that** the structural element of the repeating unit RN of the polymer P, which has the heterocycle comprising at least one quaternary nitrogen heteroatom, corresponds to the following structural formula (I): 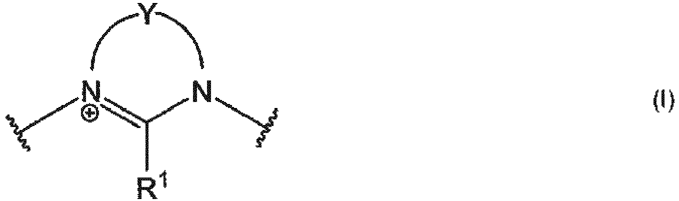
in which the functional group R¹ is selected from hydrogen, branched or unbranched aliphatic compounds having no more than 6 carbon atoms or the functional group -(CR⁴R⁴)ₓ-[Z(R⁴)₍ₚ₋₁₎-(CR⁴R⁴)_{y}]ₙ-Z(R⁴)ₚ, Z in each case being selected from oxygen or nitrogen and p assuming the value 2 if Z is nitrogen and otherwise being equal to 1, and x and y each being natural numbers from 1 to 4 and n also being a natural number from 0 to 4 and R⁴ being selected from hydrogen or branched or unbranched aliphatic compounds having no more than 6 carbon atoms;
in which Y is a ring-constituting divalent functional group having no more than 5 bridge atoms, it being possible for no more than one hetero-bridge atom which is different from carbon atoms and is selected from oxygen, nitrogen or sulfur to be a bridge atom, and the carbon atoms in turn being substituted, independently of one another, with functional groups R¹ or functional groups by means of which aromatic homocycles having no more than 6 carbon atoms are anellated.

3. The method according to one or both of the preceding claims, **characterized in that** the repeating units R_{N} of the polymer P have the following structural formula (II): 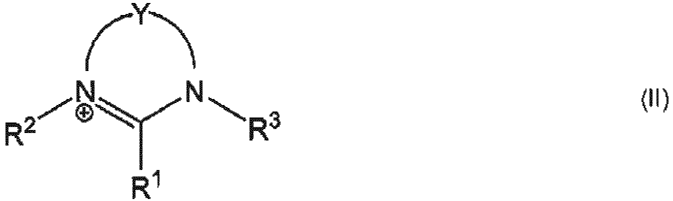
in which the functional group R¹ is selected from hydrogen, branched or unbranched aliphatic compounds having no more than 6 carbon atoms or the functional group -(CR⁴R⁴)ₓ-[Z(R⁴)₍ₚ₋₁₎-(CR⁴R⁴)_{y}]ₙ-Z(R⁴)ₚ, Z in each case being selected from oxygen or nitrogen and p assuming the value 2 if Z is nitrogen and otherwise being equal to 1, and x and y each being natural numbers from 1 to 4 and n also being a natural number from 0 to 4 and R⁴ being selected from hydrogen or branched or unbranched aliphatic compounds having no more than 6 carbon atoms;
in which the functional groups R² and R³ are selected from functional groups R¹ or the remaining fragment of the repeating unit R_{N}, via which the repeating units R_{N} are covalently bonded to one another or to other repeating units R_{X}, with the proviso that either R² or R³ represents the fragment of the repeating unit R_{N};
in which Y is a ring-constituting divalent functional group having no more than 5 bridge atoms, it being possible for no more than one hetero-bridge atom which is different from carbon atoms and is selected from oxygen, nitrogen or sulfur to be a bridge atom, and the carbon atoms in turn being substituted, independently of one another, with functional groups R¹ or functional groups by means of which aromatic homocycles having no more than 6 carbon atoms are anellated.

4. The method according to one of claims 2 or 3, **characterized in that** the ring-constituting divalent functional group Y is selected from ethylene, ethenediyl, 1,3-propanediyl, 1,3-propenediyl, 1,4-butanediyl, 1,4-butenediyl, 1,4-butadienediyl, -CH=N-, -CH₂-NH-, (N,N-dimethylene)amine or (N-methylene-N-methylylidene)amine, preferably from ethenediyl, 1,4-butadienediyl, -C=N- or (N-methylene-N-methylylidene)amine, particularly preferably from ethenediyl or -C=N- and more particularly preferably from ethenediyl, it being possible for each hydrogen covalently bonded to carbon atoms to be substituted by the remaining representatives of the functional group R¹.

5. The method according to one or more of the preceding claims, **characterized in that** the repeating unit R_{N} is selected from 1-methyl-3-vinylimidazolium, 1-ethyl-3-vinylimidazolium, 1-isopropyl-3-vinylimidazolium, 1-propyl-3-vinylimidazolium, 1-(n-butyl)-3-vinylimidazolium, 1-(isobutyl)-3-vinylimidazolium, 1-methoxy-3-vinylimidazolium, 1-ethoxy-3-vinylimidazolium, 1-propoxy-3-vinylimidazolium, preferably from 1-methyl-3-vinylimidazolium.

6. The method according to one or both of the preceding claims, **characterized in that** the polymer P contains at least one further repeating unit R_{X} selected from vinylpyrrolidone, vinylcaprolactam, vinyl acetate, vinylimidazole, (meth)acrylic acid amide, (meth)acrylic acid, (meth)acrylic acid esters and/or styrene, preferably selected from vinylpyrrolidone, vinylimidazole and/or (meth)acrylic acid amide.

7. The method according to one or more of the preceding claims, **characterized in that** the proportion by weight of the repeating units R_{N} is at least 60%, preferably at least 80%, based on the total proportion of the polymer P.

8. The method according to one or more of the preceding claims, **characterized in that** the proportion of the polymer P in the composition (A) is at least 0.05 g/kg, preferably at least 0.2 g/kg, particularly preferably at least 0.4 g/kg, but preferably not greater than 2 g/kg.

9. The method according to one or more of the preceding claims, **characterized in that** a conversion coating is not produced on the surfaces of the metal components in step i).

10. The method according to one or more of the preceding claims, **characterized in that** the composition (B) in step ii) contains a source of fluoride ions, preferably selected from complex or simple fluorides.

11. The method according to one or more of the preceding claims, **characterized in that** the composition (B) in step ii) additionally contains water-soluble compounds which are a source of copper ions, preferably in the form of water-soluble salts.

12. The method according to one or more of the preceding claims, **characterized in that** there is no rinsing step, preferably neither a rinsing step nor a drying step, between the method steps i) and ii).

13. The method according to one or more of the preceding claims, **characterized in that** the component has, at least in part, surfaces made of the materials iron and/or steel, and preferably at least 50%, particularly preferably at least 80%, of the metal surface of the component is formed from surfaces of iron and/or steel.

14. The method according to one or more of the preceding claims, **characterized in that**, in addition to surfaces of iron and/or steel, the component also has surfaces of zinc and/or galvanized steel and preferably also has surfaces of aluminum.

15. The method according to one or more of the preceding claims, **characterized in that** the surfaces of zinc and/or galvanized steel have an iron coating of at least 20 mg/m².

## Revendications

1. Procédé en plusieurs étapes pour le prétraitement anticorrosion de composants constitués au moins partiellement de matériaux métalliques, dans lequel, tout d'abord
i) au moins une partie des surfaces du composant formées par les matériaux métalliques, comprenant une composition aqueuse (A) contenant un polymère organique P dissous et/ou dispersé, lequel est composé à raison d'au moins 40 % en poids par rapport à la proportion totale du polymère P de motifs de répétition R_{N} présentant, comme élément structural, un hétérocycle comprenant au moins un hétéroatome azoté quaternaire, et ensuite
ii) au moins la même partie des surfaces du composant formées par les matériaux métalliques est mise en contact avec une composition aqueuse acide (B) contenant un ou plusieurs composés hydrosolubles des éléments Zr, Ti et/ou Si, avec ou sans rinçage et/ou séchage intermédiaire(s).

2. Procédé selon la revendication 1, **caractérisée** en ce l'élément structural du motif de répétition RN du polymère P présentant l'hétérocycle avec au moins un hétéroatome d'azote quaternaire correspond à la formule structurale (I) suivante : 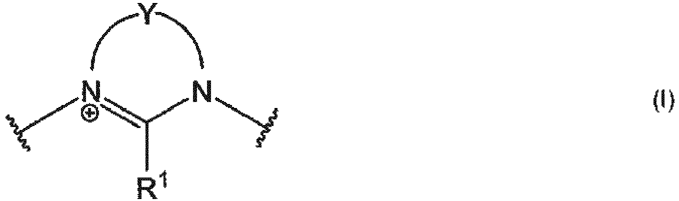
le radical R¹ étant choisi parmi l'hydrogène, les groupes aliphatiques ramifiés ou non ramifiés n'ayant pas plus de 6 atomes de carbone ou le radical -(CR⁴R⁴)ₓ-[Z(R⁴)₍ₚ₋₁₎-(CR⁴R⁴)_{y}]ₙ-Z(R⁴)ₚ, Z étant choisi respectivement parmi l'oxygène ou l'azote, et p étant égal à 2 dans le cas où Z est l'azote et étant égal à 1 dans les autres cas, et x et y étant chacun des nombres naturels compris entre 1 et 4 et n étant également un nombre naturel compris entre 0 et 4 et R⁴ étant choisi parmi l'hydrogène ou des groupes aliphatiques ramifiés ou non ramifiés n'ayant pas plus de 6 atomes de carbone ;
Y étant un radical divalent constituant le noyau ne présentant pas plus de 5 atomes de pont, au plus un hétéroatome de pont autre que des atomes de carbone pouvant être choisi parmi l'oxygène, l'azote ou un atome de pont de soufre, et les atomes de carbone étant à leur tour indépendamment substitués par des radicaux R¹ ou de tels radicaux par lesquels une fermentation d'homocycles aromatiques ayant au plus 6 atomes de carbone est réalisée.

3. Procédé selon l'une ou les deux des revendications précédentes, **caractérisé en ce que** les motifs de répétition R_{N} du polymère P correspondent à la formule structurale (II) suivante : 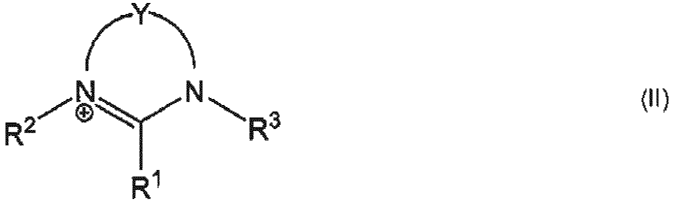
le radical R¹ étant choisi parmi l'hydrogène, les groupes aliphatiques ramifiés ou non ramifiés n'ayant pas plus de 6 atomes de carbone ou le radical -(CR⁴R⁴)ₓ-[Z(R⁴)₍ₚ₋₁₎-(CR⁴R⁴)_{y}]ₙ-Z(R⁴)ₚ, Z étant choisi respectivement parmi l'oxygène ou l'azote, et p étant égal à 2 dans le cas où Z est l'azote et étant égal à 1 dans les autres cas, et x et y étant chacun des nombres naturels compris entre 1 et 4 et n étant également un nombre naturel compris entre 0 et 4 et R⁴ étant choisi parmi l'hydrogène ou des groupes aliphatiques ramifiés ou non ramifiés n'ayant pas plus de 6 atomes de carbone ;
les radicaux R² et R³ étant choisis parmi les radicaux R¹ ou le fragment restant du motif de répétition R_{N} par lequel les motifs de répétition R_{N} sont liés de manière covalente entre eux ou à d'autres motifs de répétition R_{X}, à condition que R² ou R³ représentent ce fragment du motif de répétition R_{N} ;
Y étant un radical divalent constituant le noyau ne présentant pas plus de 5 atomes de pont, au plus un hétéroatome de pont autre que des atomes de carbone pouvant être choisi parmi l'oxygène, l'azote ou un atome de pont de soufre, et les atomes de carbone étant à leur tour indépendamment substitués par des radicaux R¹ ou de tels radicaux par lesquels une fermentation d'homocycles aromatiques ayant au plus 6 atomes de carbone est réalisée.

4. Procédé selon l'une des revendications 2 ou 3, **caractérisé en ce que** le radical Y divalent constituant le noyau est choisi parmi l'éthylène, l'éthènediyle, le 1,3-propanediyle, le 1,3-propènediyle, le 1,4-butanediyle, le 1,4-butènediyle, le 1,4-butadiènediyle, le -CH=N-, le -CH₂-NH-, la (N,N-diméthylène)amine, la (N-méthylène-N-méthylidyle)amine, de préférence parmi l'éthylènediyle, le 1,4-butadiènediyle, le -C=N- ou la (N-méthylène-N-méthylidyle)amine, de manière particulièrement préférée parmi l'éthènediyle ou le -C=N- et de manière tout particulièrement préférée parmi l'éthènediyle, chaque atome d'hydrogène lié de manière covalente à des atomes de carbone pouvant être substitué par les représentants restants du radical R¹.

5. Procédé selon l'une ou plusieurs des revendications précédentes, **caractérisé en ce que** le motif de répétition R_{N} est choisi parmi le 1-méthyl-3-vinylimldazolium, le 1-éthyl-3-vinylimidazolium, le 1-isopropyl-3-vinylimidazolium, le 1-propyl-3-vinylimidazolium, le 1-(n-butyl)-3-vinylimidazolium, le 1-(isobutyl)-3-vinylimidazolium, le 1-méthoxy-3-vinyllazmidazolium, le 1-éthoxy-3-vinyllmldazolium, le 1- propoxy-3-vinylimldazolium, de préférence parmi le 1-méthyl-3-vinylimidazolium.

6. Procédé selon l'une ou les deux des revendications précédentes, **caractérisé en ce que** le polymère P contient au moins un autre motif de répétition R_{X} choisi parmi la vinylpyrrolidone, le vinylcaprolactame, l'acétate de vinyle, le vinylimidazole, l'amide d'acide (méth)acrylique, l'acide (méth)acrylique, les esters d'acide (méth)acrylique et/ou le styrène, de préférence choisi parmi la vinylpyrrolidone, le vinylimidazole et/ou l'amide d'acide (méth)acrylique.

7. Procédé selon l'une ou plusieurs des revendications précédentes, **caractérisé en ce que** la proportion en poids des motifs de répétition RN par rapport à la proportion totale du polymère P est d'au moins 60 %, de préférence d'au moins 80 %.

8. Procédé selon l'une ou plusieurs des revendications précédentes, **caractérisé en ce que** la proportion du polymère P dans la composition (A) est d'au moins 0,05 g/kg, de préférence d'au moins 0,2 g/kg, de manière particulièrement préférée d'au moins 0,4 g/kg, mais de préférence pas supérieure à 2 g/kg.

9. Procédé selon l'une ou plusieurs des revendications précédentes, **caractérisé en ce qu'**aucune couche de conversion n'est produite sur les surfaces des composants métalliques de l'étape i).

10. Procédé selon l'une ou plusieurs des revendications précédentes, **caractérisé en ce que** la composition (B) de l'étape ii) contient une source d'ions fluorure, de préférence choisie parmi les fluorures complexes ou simples.

11. Procédé selon l'une ou plusieurs des revendications précédentes, **caractérisé en ce que** la composition (B) de l'étape ii) contient en outre des composés hydrosolubles qui représentent une source d'ions cuivre, de préférence sous forme de sels hydrosolubles.

12. Procédé selon l'une ou plusieurs des revendications précédentes, **caractérisé en ce qu'**aucune étape de rinçage, de préférence aucune étape de rinçage ni aucune étape de séchage n'a lieu entre les étapes de procédé i) et ii).

13. Procédé selon l'une ou plusieurs des revendications précédentes, **caractérisé en ce que** le composant présente au moins partiellement des surfaces des matériaux fer et/ou acier, et de préférence au moins 50 %, de manière particulièrement préférée au moins 80 % de la surface des matériaux métalliques du composant est formée de surfaces des matériaux fer et/ou acier.

14. Procédé selon l'une ou plusieurs des revendications précédentes, **caractérisé en ce que**, en plus des surfaces des matériaux fer et/ou acier, le composant présente également des surfaces des matériaux zinc et/ou acier galvanisé et de préférence aussi des surfaces du matériau aluminium.

15. Procédé selon l'une ou plusieurs des revendications précédentes, **caractérisé en ce que** les surfaces des matériaux zinc et/ou acier galvanisé présentent un revêtement de manchon d'au moins 20 mg/m².
